# EUROPÄISCHE PATENTSCHRIFT

(11) **EP 3 010 683 B1**
(45) Veröffentlichungstag und Bekanntmachung des Hinweises auf die Patenterteilung: **24.03.2021**
(21) Anmeldenummer: 14734034.3
(22) Anmeldetag: 17.06.2014
(51) Int. Cl.: B25J 15/08, B25J 15/02, B25J 15/12

(54) **GREIF- ODER SPANNVORRICHTUNG ZUM GREIFEN ODER SPANNEN VON GEGENSTÄNDEN UND VERFAHREN HIERFÜR**
GRIPPING OR CLAMPING DEVICE FOR GRIPPING OR CLAMPING OBJECTS AND METHOD THEREFOR
DISPOSITIF DE PRÉHENSION OU DE SERRAGE PERMETTANT DE SAISIR OU DE SERRER DES OBJETS ET PROCÉDÉ POUR LEDIT DISPOSITIF

(30) Priorität: 19.06.2013 DE 102013211528
(43) Veröffentlichungstag der Anmeldung: 27.04.2016
(73) Patentinhaber: Schunk GmbH & Co. KG Spann- und Greiftechnik, 74348 Lauffen am Neckar (DE)
(72) Erfinder: BECKER, Ralf, 71672 Marbach (DE); DRAB, Michael, 73033 Goeppingen (DE); QUAAS, Matthias, 74232 Abstatt (DE)
(74) Vertreter: DREISS Patentanwälte PartG mbB
(86) Internationale Anmeldenummer: PCT/EP2014/062652
(87) Internationale Veröffentlichungsnummer: WO 2014/202568

(56) Entgegenhaltungen:
- EP-A1- 0 134 819
- WO-A1-2011/111601
- DE-A1- 10 048 662
- DE-A1-102011 084 177
- DE-A1-102011 084 177
- JP-A- 2009 202 332

## Beschreibung

Greif- oder Spannvorrichtung zum Greifen oder Spannen von Gegenständen und Verfahren hierfür.

Die Erfindung betrifft eine Greif- oder Spannvorrichtung zum Greifen oder Spannen von Gegenständen, mit einem Stellglied und einem das Stellglied antreibenden Antrieb, mit wenigstens einer mit dem Stellglied bewegungsgekoppelten, über eine Backenführung entlang eines Grundteils verfahrbaren Backe, wobei zwischen dem Stellglied und der Backe ein elastisch verformbares Federelement vorgesehen ist.

Derartige Greif- oder Spannvorrichtungen sind beispielsweise vorbekannt aus der DE 100 48 673 A1, der DE 10 2011 084 177 A1 oder der WO 2011/111601 A1. Eine Greif- oder Spannvorrichtung mit den Merkmalen des Oberbegriffs des Anspruchs 1 ist aus der JP 2009 202332 A bekannt.

Bei derartigen Greif- oder Spannvorrichtungen dient das Federelement insbesondere dazu, auftretende pulsartige Kräfte zu dämpfen und damit die Lebensdauer der Greif- oder Spannvorrichtung zu erhöhen.

Der vorliegenden Erfindung liegt nun die Aufgabe zu Grunde, eine derartige Greif- oder Spannvorrichtung weiterzubilden.

Diese Aufgabe wird mit einer Greif- oder Spannvorrichtung mit den Merkmalen des Anspruchs 1 gelöst. Auf Grund der Rückstellkraft des elastisch verformten Federelements kann eine Vorspannkraft bereitgestellt werden, mit der der Gegenstand gegriffen wird. Der Gegenstand kann insbesondere auch dann zuverlässig gegriffen werden, wenn der Antrieb ausgeschaltet ist oder ausfällt. Dadurch kann eine Greifkrafterhaltung bereitgestellt werden.

Insbesondere dann, wenn das Stellglied oder das mit ihm zusammenwirkende, bewegungsgekoppelte Bauteil dann festgesetzt wird, wenn die maximale Verformung, oder zumindest nahezu die maximale Verformung, des Federelements erreicht wird, kann eine Greifkraft zur Verfügung gestellt werden, die größer ist als eine rein mit dem Antrieb bereitgestellte Greifkraft. Dies ist deshalb möglich, weil die kinetische Energie der bewegten Masse zur Greifkrafterhöhung im Federelement gespeichert werden kann und auch dann zur Verfügung steht, wenn eine Festsetzung des Stellglieds, oder eines entsprechenden Bauteils, erfolgt ist und der Antrieb abgeschaltet ist.

Vorteilhafterweise ist das Federelement unter Vorspannung zwischen dem Stellglied und der Backe angeordnet.

Das Federelement kann insbesondere als Elastomerdämpfer realisiert sein. Dabei haben sich Elastomerblöcke, Elastomerkugeln, Elastomerringe oder Elastomerschläuche als vorteilhaft herausgestellt.

Insbesondere vorteilhaft ist, wenn die elastische Verformung und die daraus resultierende Rückverformung des Federelements bei gegriffenem Gegenstand größer ist als das Spiel zwischen dem festgesetzten Stellglied, oder dem festgesetzten Bauteil, und dem Federelement. Dadurch kann gewährleistet werden, dass bei festgesetztem Stellglied oder Bauteil ein Lösen des gegriffenen Gegenstandes nicht erfolgen kann, da, ein gegebenenfalls vorhandenes Spiel, durch eine gegebenenfalls stattfindende Rückverformung des Federelements in Richtung Greifkraft kompensiert wird.

Ferner ist vorteilhaft, wenn eine Steuereinheit vorgesehen ist, die die Bremseinheit dann aktiviert, wenn der Gegenstand gegriffen und das Federelement elastisch verformt ist.

Vorteilhaft ist, wenn die Steuereinheit die Bremseinheit derart ansteuert, dass die Bremse auch dann aktiviert wird, wenn die Steuereinheit einen Stromausfall detektiert. Bei Stromausfall wird folglich eine Bewegung der Backen dann unterbunden.

Die Steuereinheit kann zudem mit Sensormitteln korrespondieren, mit denen eine Verformung des Federelements detektierbar ist. Die Verformung kann dabei mittelbar oder unmittelbar detektierbar sein.

Die Sensormittel können insbesondere als Druckmessmittel ausgebildet sein, mit denen der auf das Federelement wirkende Druck und damit die Verformung des Federelements detektierbar ist.

Ferner ist denkbar, dass die Sensormittel Wegmessmittel sind, mit denen die Lage der Backe, und damit die Verformung des Federelements, detektierbar ist.

Weiterhin ist vorteilhaft, wenn der Antrieb als Elektromotor ausgebildet ist und wenn die Sensormittel Strommessmittel sind, mit denen über den Stromverbrauch des Elektromotors die Greifkraft, und damit die Verformung des Federelements detektierbar ist.

Der Antrieb kann vorteilhafterweise eine rotierende Antriebswelle aufweisen, wobei dann die Bremseinheit vorteilhafterweise so ausgebildet ist, dass sie die Antriebswelle festsetzt. Die Antriebswelle bildet dann das festsetzbare, zwischen dem Stellglied und dem Antrieb vorgesehene Bauteil. Das Festsetzen der Antriebswelle kann dabei insbesondere durch Festklemmen erfolgen.

Die Antriebswelle kann zwei freie Enden aufweisen, wobei das eine freie Ende mit dem Stellglied zusammenwirkt und das andere freie Ende mit der Bremseinheit zusammenwirkt. Eine derartige Ausbildung kann vergleichsweise platzsparend und dennoch funktionssicher realisiert werden.

Zur Bereitstellung einer optimalen Greifkraft ist denkbar, dass zwischen dem Antrieb und dem Stellglied ein Antriebsgetriebe mit einer Abtriebswelle vorgesehen ist, und dass die Bremseinheit auf die Abtriebswelle wirkt.

Ferner ist denkbar, dass ein Antriebsgetriebe zwischen dem Antrieb und dem Stellglied derart vorgesehen ist, dass es die Bremseinheit bildet, indem es eine Selbsthemmung aufweist, auf Grund welcher das Stellglied oder das mit dem Stellglied bewegungsgekoppelte Bauteil in der Greiflage gehalten wird. Dies hat den Vorteil, dass keine zusätzlich ansteuerbare Bremseinheit erforderlich ist. Ein auf Grund der Selbsthemmung auftretendes Spiel ist dabei so zu wählen, dass es geringer ist als die elastische Rückverformung des Federelements.

Das Stellglied als solche kann auch als um eine Drehachse verdrehbares Ritzel ausgebildet sein, wobei das Federelement insbesondere zwischen der Backe und einem das Ritzel kämmenden, backenseitigen Zahnstangenabschnitt vorgesehen sein kann.

Andererseits ist denkbar, dass das Stellglied als um eine Drehachse verdrehbares Ritzel ausgebildet ist, wobei das Federelement auch zwischen der Drehachse und dem Ritzel, insbesondere als Elastomerring oder Elastomerhülse, ausgebildet sein kann. Ein derartiges Federelement wird dann auf Torsion beansprucht. Das Ritzel kann dabei ebenfalls einen backenseitig angeordneten Zahnstangenabschnitt kämmen.

Für den Fall, dass backenseitig wenigstens ein Zahnstangenabschnitt vorgesehen ist, ist denkbar, dass ein Sollwertzahnstangenabschnitt zwei einander gegenüberliegende, sich quer zur Bewegungsrichtung der Backe erstreckende Schmalseiten aufweist, die jeweils mit einem Federelement zusammenwirken. Die Federelemente wirken dabei einerseits auf den Zahnstangenabschnitt und andererseits auf die Backe. Die Federelemente werden hierbei in Längsrichtung, also in Bewegungsrichtung der Backen, beansprucht.

Die eingangs genannte Aufgabe wird auch durch ein Verfahren zum Betreiben einer erfindungsgemäßen Greif- oder Spannvorrichtung mit den Merkmalen des Anspruchs 15 gelöst.

Weitere Ausbildungen und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
Figur 1 einen Längsschnitt durch eine erfindungsgemäße Spannvorrichtung gemäß der Linie I-I in Figur 2;
Figur 2 einen Querschnitt durch die Vorrichtung gemäß Figur 1 entlang der Linie II-II; und
Figur 3 eine schematische Darstellung eines Schnitts entlang der Linie III-III gemäß Figur 2.

In den Figuren ist eine erfindungsgemäße Spannvorrichtung 10 gezeigt, die einen Antrieb 12 in Form eines Elektromotors umfasst. Zur Aktivierung des Antriebs 12 ist eine Steuereinheit 14 vorgesehen. Der Antrieb weist eine Antriebswelle 16 auf, an deren einem freien Ende ein Ritzel 18 vorgesehen ist. Dem Ritzel 18 ist ein Antriebsgetriebe 20 in Form eines Stirnradgetriebes nachgeschaltet. Das Antriebsgetriebe 20 umfasst eine Abtriebswelle 22 mit einem Ritzel 24. Die Abtriebswelle 22 mit dem Ritzel 24 bildet dabei ein Stellglied 26, über welches zwei einander gegenüberliegende Backen 28, 30 antreibbar sind.

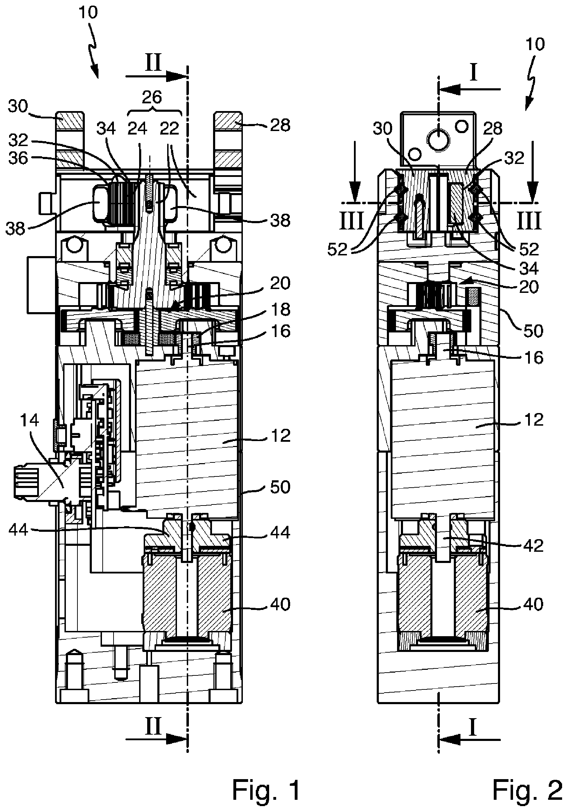

Die Backen 28, 30 sehen jeweils eine Ausnehmung 32 vor, in der jeweils ein Zahnstangenabschnitt 34 untergebracht ist. Die Zahnstangenabschnitte 34 weisen dabei jeweils zwei einander gegenüberliegende, sich quer zur Bewegungsrichtung der jeweiligen Backe 28, 30 erstreckenden Schmalseiten 36 auf, die jeweils mit einem sich an der jeweiligen Backe 28, 30 abstützenden Federelement 38 zusammenwirken. An jeder Backe 28, 30 sind folglich zwei Federelemente 38 vorgesehen, zwischen denen, in Bewegungsrichtung der Backe, jeweils ein Zahnstangenabschnitt 34 vorgesehen ist. Im Schnitt gemäß Figur 1 sind zwei Federelemente 38 an der Backe 30 zu erkennen.

Bei Aktivierung des Antriebs 12 über die Steuereinheit 14 wird folglich das Stellglied 26 über das Antriebsgetriebe 20 angetrieben. Über das Stellglied 26, beziehungsweise dessen Ritzel 24, werden die Backen 28, 30 entlang ihrer jeweiligen Bewegungsrichtung in entgegengesetzte Richtungen bewegt.

Die Federelemente 38, die insbesondere als federelastische Elastomerblöcke ausgebildet sein können, werden dann, wenn mit den Backen 28, 30 ein Gegenstand gegriffen wird, elastisch nachgiebig verformt. Beim Auftreffen der Backen 28, 30 auf den zu spannenden Gegenstand, können dadurch auftretende Kraftimpulse gedämpft werden.

Die Spannvorrichtung 10 umfasst eine Bremseinheit 40, die ebenfalls über die Steuereinheit 14 ansteuerbar ist. Über die Bremseinheit 40 kann mittelbar das Stellglied 26 festgesetzt werden. Der Antrieb 12, beziehungsweise dessen Antriebswelle 16, sieht dabei auf der dem Ritzel 18 abgewandten Seite ein freies Ende 42 vor, welches von der Bremseinheit 40 festgesetzt werden kann. Die Bremseinheit 40 kann dabei Klemmbacken 44 vorsehen, die bei betätigter Bremseinheit 40 gegen das Wellenende 42 wirken und dieses, und damit auch das Stellglied 26, festsetzen.

Ein Festsetzen des Wellenendes 42 erfolgt insbesondere dann, wenn der zu greifende Gegenstand gegriffen und die Federelemente 38 elastisch verformt sind. Dies hat den Vorteil, dass dann bei nicht betätigtem Antrieb 12 eine Greifkrafterhaltung auf Grund der elastischen Nachgiebigkeit beziehungsweise Rückstellkraft der Federelemente 38 bereitgestellt wird.

Ein zwischen den mechanisch gekoppelten Bauteilen vorhandenes Spiel, also ein Spiel, das sich aus dem Spiel des Antriebs 12, des Antriebsgetriebes 20 und dem Zusammenwirken des Ritzels 24 mit den Zahnstangenabschnitten 34 ergibt, ist dabei vorzugsweise geringer, als die elastische Verformung beziehungsweise Rückverformung der jeweiligen Federelemente 38 im gegriffenen Zustand. Hierdurch kann sichergestellt werden, dass bei abgeschaltenem, oder ausgefallenem Antrieb dennoch ein sicheres Halten des gegriffenen Gegenstandes möglich ist.

Ferner ist vorteilhaft, wenn Sensormittel vorgesehen sind, mittels denen eine Verformung der Federelemente 38, und damit ein sicheres Greifen der zu greifenden Gegenstände detektierbar ist. Als Sensormittel kommen insbesondere Druckmessmittel in Betracht, mittels denen der auf das jeweilige Federelement 38 wirkende Druck gemessen werden kann. Zudem sind Wegmessmittel denkbar, mit denen die Lage der jeweiligen Backe 28, 30 detektierbar ist. Auch Strommessmittel sind denkbar, mit denen über den Stromverbrauch des Elektromotors 12 die jeweilige Greifkraft, und damit auf die Verformung des jeweiligen Federelements 38, rückgeschlossen werden kann.

Wie aus den Figuren 1 und 2 deutlich wird, sind sämtliche Bauteile der Spannvorrichtung 10 in einem Gehäuse 50 untergebracht. Auch die Backen 28 und 30 sind über Lagermittel 52 im Gehäuse 50 in ihrer jeweiligen axialen Lage verschiebbar angeordnet.

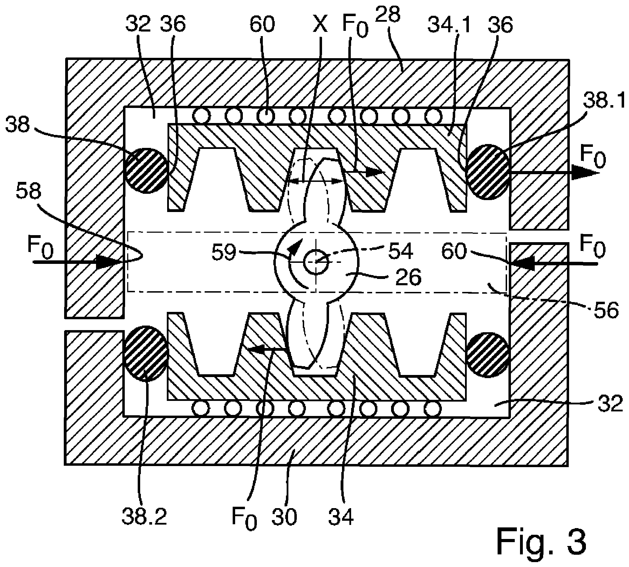

Figur 3 zeigt schematisch die Greiflage der Spannvorrichtung 10. Dargestellt ist in vereinfachter Art und Weise das Stellglied 26, das um seine Drehachse 54 vom Antrieb 12, über das Antriebsgetriebe 20, verdrehbar ist. Ferner ist ein Gegenstand 56 gezeigt, der von den Backen 28, 30 gegriffen ist.

Zwischen dem Stellglied 26 und den Backen 28, 30 ist jeweils der backenseitige angeordnete Zahnstangenabschnitt 34 vorgesehen, der relativ zu den Backen 28, 30 in Bewegungsrichtung der Backen 28, 30 bewegbar ist. Zwischen den einander gegenüberliegenden Schmalseiten 36 der Zahnstangenabschnitte 34 sind die Federelemente 38 deutlich zu erkennen.

Die Zahnstangenabschnitte 34 sind dabei in den jeweiligen Ausnehmungen 32 der Backen 28, 30 mittels geeigneten Gleitmitteln 52 gelagert.

Zum Greifen des Gegenstandes 56 wird über den Antrieb das Stellelement 26 in Richtung des Pfeils 59 verdreht. In der Figur 3 ist diese Verdrehstellung des Stellglieds 26 dargestellt; die linke Stellung des Stellglieds 26 ist strichpunktiert dargestellt. Auf Grund der Drehbewegung des Stellglieds 26 wird zum einen der Zahnstangenabschnitt 34.1 in Figur 3 nach rechts bewegt und durch das Auftreffen auf das Werkstück wird das Federelement 38.1 mit einer Greifkraft F₀ beaufschlagt. Hierdurch erfolgt eine elastisch nachgiebige Verformung des Federelements 38.1. Diese Verformung des Federelements 38.1 ist in der Figur 3 dargestellt.

Über das Federelement 38.1 wird dann die Greifkraft Fo in die Backe 28 eingeleitet. Diese Greifkraft Fo wird dann von der Backe 28 an der Stelle 58 in den zu greifenden Gegenstand 56 eingeleitet.

Eine entsprechende Greifkraft Fo wird entsprechend über die Backe 30 an der Stelle 60 in den zu greifenden Gegenstand 56 eingeleitet. In der gezeigten Greiflage sind folglich die beiden diagonal einander gegenüberliegenden Federelemente 38.1 und 38.2 elastisch nachgiebig verformt.

Mit der in Figur 3 nicht dargestellten Bremseinheit wird dann das Stellelement 26 unmittelbar, oder wie in Figur 1 und 2 gezeigt, mittelbar über das Antriebsgetriebe 20 und den Antrieb 12 festgesetzt. Dabei ist denkbar, dass auf Grund von vorhandenem Spiel das Stellglied 26 entgegen der an der Stelle 58 wirkenden Kraft Fo um einen Weg x rückverdreht wird. Diese Rückstellbewegung des Stellglieds 26 um den Weg x wird durch ein Rückverformen des Federelements 38.1 kompensiert, so dass die Backe 28 auf Grund der Rückstellbewegung des Stellelements 26 ihre absolute Lage nicht ändert. Entsprechendes gilt für die Backe 30. Dabei ist die elastische Verformung der Federelemente 38 beim Greifen derart zu wählen, dass trotz einer Rückstellbewegung um den Weg x eine ausreichende Greifkraft vorhanden ist, um den Gegenstand 56 auch dann sicher zu greifen, wenn die Bremseinheit aktiviert ist und der Antrieb deaktiviert ist oder ausfällt.

Zudem ist denkbar, eine Greifkrafterhöhung zu erzielen. Dies kann dadurch erfolgen, dass die kinetische Energie des Stellglieds 26 ausgenutzt wird. Insbesondere dann, wenn durch die Bremseinheit das Stellglied 26 dann festgesetzt wird, wenn die Verformung der Federelemente 38 maximal ist, kann eine Greifkrafterhöhung bereitgestellt werden.

## Patentansprüche

1. Greif- oder Spannvorrichtung (10) zum Greifen oder Spannen von Gegenständen (56), mit einem Stellglied (26) und einem das Stellglied (26) antreibenden Antrieb (12), mit wenigstens einer mit dem Stellglied (26) bewegungsgekoppelten Backe (28, 30), wobei zwischen dem Stellglied (26) und der Backe (28, 30) ein elastisch verformbares Federelement (38) vorgesehen ist, wobei eine Bremseinheit (40) vorgesehen ist, mit der das Stellglied (26), oder ein mit dem Stellglied (26) bewegungsgekoppeltes, zwischen dem Stellglied (26) und dem Antrieb (40) vorgesehenes Bauteil (42), dann festsetzbar ist, wenn der Gegenstand (56) gegriffen und das Federelement (38) elastisch verformt ist, wobei der Antrieb eine rotierende Antriebswelle (16) aufweist, und wobei der Antriebswelle (16) ein Antriebsgetriebe (20) mit einer Abtriebswelle (22) nachgeschaltet ist, wobei das Antriebsgetriebe (20) zwischen dem Antrieb (12) und dem Stellglied (26) vorgesehen ist, und
**dadurch gekennzeichnet, dass** die Bremseinheit (40) die Antriebswelle (16) dann festsetzt, wenn die maximale oder zumindest nahezu die maximale Verformung des Federelements (38) erreicht wird, so dass die kinetische Energie der bewegten Masse zur Greifkrafterhöhung im Federelement (38) so gespeichert wird, dass dadurch eine Greifkraft zur Verfügung gestellt wird, die größer ist als eine rein mit dem Antrieb bereitgestellte Greifkraft, und die dann zur Verfügung steht, wenn die Antriebswelle (16) festgesetzt und der Antrieb (12) abgeschaltet ist.

2. Greif- oder Spannvorrichtung (10) nach Anspruch 1, **dadurch gekennzeichnet, dass** das Federelement (38) als unter Vorspannung zwischen dem Stellglied (26) und der Backe (28, 30) angeordneter Elastomerdämpfer ausgebildet ist.

3. Greif- oder Spannvorrichtung (10) nach Anspruch 1 oder 2, **dadurch gekennzeichnet, dass** die elastische Verformung des Federelements (38) bei gegriffenem Gegenstand (56) größer ist als das Spiel des festgesetzten Stellglieds (26).

4. Greif- oder Spannvorrichtung (10) nach Anspruch 1, 2 oder 3, **dadurch gekennzeichnet, dass** eine Steuereinheit (14) vorgesehen ist, die die Bremseinheit (40) dann aktiviert, wenn der Gegenstand (56) gegriffen und das Federelement (38) elastisch verformt ist.

5. Greif- oder Spannvorrichtung (10) nach Anspruch 4, **dadurch gekennzeichnet, dass** die Steuereinheit (14) die Bremseinheit (40) derart ansteuert, dass die Bremseinheit (40) dann aktiviert wird, wenn die Steuereinheit (14) einen Stromausfall detektiert.

6. Greif- oder Spannvorrichtung (10) nach Anspruch 4 oder 5, **dadurch gekennzeichnet, dass** die Steuereinheit (14) die Bremseinheit (40) derart aktiviert, dass aufgrund der bewegten Masse auftretende kinetische Energie zur Greifkrafterhöhung im Federelement (38) gespeichert wird.

7. Greif- oder Spannvorrichtung (10) nach Anspruch 4, 5 oder 6, **dadurch gekennzeichnet, dass** die Steuereinheit (14) mit Sensormitteln korrespondiert, mit denen eine Verformung des Federelements (38) detektierbar ist.

8. Greif- oder Spannvorrichtung (10) nach Anspruch 7, **dadurch gekennzeichnet, dass** die Sensormittel Druckmessmittel sind, mit denen der auf das Federelement (38) wirkende Druck damit die Verformung des Federelements (38) detektierbar ist.

9. Greif- oder Spannvorrichtung (10) nach Anspruch 7 oder 8, **dadurch gekennzeichnet, dass** die Sensormittel Wegmessmittel sind, mit denen die Lage der Backe (28, 30) und damit die Verformung des Federelements (38) detektierbar ist.

10. Greif- oder Spannvorrichtung (10) nach Anspruch 7, 8 oder 9, **dadurch gekennzeichnet, dass** der Antrieb (40) als Elektromotor ausgebildet ist und dass die Sensormittel Strommessmittel sind, mit denen über den Stromverbrauch des Elektromotors die Greifkraft und damit die Verformung des Federelements (38) detektierbar ist.

11. Greif- oder Spannvorrichtung (10) nach Anspruch 10, **dadurch gekennzeichnet, dass** die Antriebswelle (16) zwei freie Enden aufweist, und wobei das eine freie Ende mit dem Stellglied (26) zusammen wirkt und das andere freie Ende (42) mit der Bremseinheit (40) zusammen wirkt.

12. Greif- oder Spannvorrichtung (10) nach einem der vorhergehenden Ansprüche, **dadurch gekennzeichnet, dass** das Stellglied (26) als um eine Drehachse verdrehbares Ritzel (24) ausgebildet ist, wobei das Federelement (38) zwischen der Backe (28, 30) und einem das Ritzel kämmenden, backenseitig angeordneten Zahnstangenabschnitt (34) vorgesehen ist.

13. Greif- oder Spannvorrichtung (10) nach einem der Ansprüche 1 bis 12,
**dadurch gekennzeichnet, dass** das Stellglied als um eine Drehachse verdrehbares Ritzel ausgebildet ist, wobei das Federelement zwischen der Drehachse und dem Ritzel vorgesehen ist.

14. Greif- oder Spannvorrichtung (10) nach Anspruch 13, **dadurch gekennzeichnet, dass** der Zahnstangenabschnitt (28) zwei einander gegenüberliegende, sich quer zur Bewegungsrichtung der Backe (28, 30) erstreckende Schmalseiten (36) aufweist, die jeweils mit einem Federelement (38) zusammen wirken.

15. Verfahren zum Betreiben einer Greif- oder Spannvorrichtung nach einem der vorherigen Ansprüche, **gekennzeichnet durch** folgende Schritte:
- Betätigen des Antriebs (12) zum Verfahren der Backe (28, 30) gegen den zu greifenden Gegenstand (56),
- Festsetzen des Stellglieds (26) oder eines mit dem Stellglied bewegungsgekoppelten, zwischen dem Stellglied (26) und dem Antrieb (12) vorgesehenen Bauteil (42), wenn der Gegenstand (56) gegriffen und das Federelement (38) elastisch verformt ist,
- wobei das Festsetzen des Stellglieds (26) oder des Bauteil (42) derart erfolgt, dass aufgrund der bewegten Masse auftretende kinetische Energie zur Greifkrafterhöhung im Federelement (38) so gespeichert wird, dass eine Greifkraft zur Verfügung gestellt wird, die größer ist als eine rein mit dem Antrieb bereitgestellte Greifkraft.

## Claims

1. Gripping or clamping device (10) for gripping or clamping objects (56), comprising an actuator (26) and a drive (12) which drives the actuator (26), and at least one jaw (28, 30) which is movably coupled to the actuator (26), an elastically deformable spring element (38) being provided between the actuator (26) and the jaw (28, 30), a brake unit (40) being provided, by means of which the actuator (26), or a component (42) which is provided between the actuator (26) and the drive (40) and is movably coupled to the actuator (26), can be fixed when the object (56) is gripped and the spring element (38) is elastically deformed, the drive having a rotating drive shaft (16), and a drive transmission (20) which has an output shaft (22) being connected downstream of the drive shaft (16), the drive transmission (20) being provided between the drive (12) and the actuator (26), and **characterized in that** the brake unit (40) fixes the drive shaft (16) when the maximum or at least almost the maximum deformation of the spring element (38) is reached, so that the kinetic energy of the moving mass, in order to increase gripping force, is stored in the spring element (38) such that a gripping force is made available as a result, which gripping force is greater than a gripping force provided purely by the drive and is available when the drive shaft (16) is fixed and the drive (12) is switched off.

2. Gripping or clamping device (10) according to claim 1, **characterized in that** the spring element (38) is designed as an elastomer damper arranged under pretension between the actuator (26) and the jaw (28, 30).

3. Gripping or clamping device (10) according to claim 1 or claim 2, **characterized in that** the elastic deformation of the spring element (38) when the object (56) is gripped is greater than the play of the fixed actuator (26).

4. Gripping or clamping device (10) according to claim 1, claim 2 or claim 3, **characterized in that** a control unit (14) is provided which activates the brake unit (40) when the object (56) is gripped and the spring element (38) is elastically deformed.

5. Gripping or clamping device (10) according to claim 4, **characterized in that** the control unit (14) controls the brake unit (40) in such a way that the brake unit (40) is activated when the control unit (14) detects a power failure.

6. Gripping or clamping device (10) according to claim 4 or claim 5, **characterized in that** the control unit (14) activates the brake unit (40) in such a way that kinetic energy resulting from the moving mass is stored in the spring element (38) in order to increase the gripping force.

7. Gripping or clamping device (10) according to claim 4, claim 5 or claim 6, **characterized in that** the control unit (14) communicates with sensor means by means of which a deformation of the spring element (38) can be detected.

8. Gripping or clamping device (10) according to claim 7, **characterized in that** the sensor means are pressure measuring means by means of which the pressure acting on the spring element (38) and the deformation of the spring element (38) can be detected.

9. Gripping or clamping device (10) according to claim 7 or claim 8, **characterized in that** the sensor means are displacement measuring means by means of which the position of the jaw (28, 30) and thus the deformation of the spring element (38) can be detected.

10. Gripping or clamping device (10) according to claim 7, claim 8 or claim 9, **characterized in that** the drive (40) is designed as an electric motor and **in that** the sensor means are current measuring means by means of which the gripping force and thus the deformation of the spring element can be detected via the power consumption of the electric motor (38).

11. Gripping or clamping device (10) according to claim 10, **characterized in that** the drive shaft (16) has two free ends, one free end interacting with the actuator (26) and the other free end (42) interacting with the brake unit (40).

12. Gripping or clamping device (10) according to any of the preceding claims, **characterized in that** the actuator (26) is designed as a pinion (24) which is rotatable about an axis of rotation, the spring element (38) being provided between the jaw (28, 30) and a rack portion (34) which meshes with the pinion and is arranged on the jaw side.

13. Gripping or clamping device (10) according to any of claims 1 to 12, **characterized in that** the actuator is designed as a pinion which is rotatable about an axis of rotation, the spring element being provided between the axis of rotation and the pinion.

14. Gripping or clamping device (10) according to claim 13, **characterized in that** the rack portion (28) has two opposite narrow sides (36) extending transversely to the direction of movement of the jaw (28, 30), which narrow sides each interact with a spring element (38).

15. Method for operating a gripping or clamping device according to any of the preceding claims, **characterized by** the following steps:
- actuating the drive (12) for moving the jaw (28, 30) toward the object (56) to be gripped,
- fixing the actuator (26), or a component (42) which is provided between the actuator (26) and the drive (12) and is movably coupled to the actuator, when the object (56) is gripped and the spring element (38) is elastically deformed,
- the actuator (26) or the component (42) being fixed in such a way that kinetic energy resulting from the moving mass, in order to increase the gripping force, is stored in the spring element (38) such that a gripping force is made available that is greater than a gripping force provided purely by the drive.

## Revendications

1. Dispositif de préhension ou de serrage (10) permettant de saisir ou de serrer des objets (56), avec un actionneur (26) et un entraînement (12) entraînant l'actionneur (26), avec au moins une mâchoire (28, 30) accouplée en mouvement à l'actionneur (26), dans lequel un élément ressort (38) déformable élastiquement est prévu entre l'actionneur (26) et la mâchoire (28, 30), dans lequel une unité de freinage (40) est prévue, avec laquelle l'actionneur (26), ou une pièce (42) accouplée en mouvement à l'actionneur (26), prévue entre l'actionneur (26) et l'entraînement (40), peut être immobilisé lorsque l'objet (56) est saisi et l'élément ressort (38) est déformé élastiquement, dans lequel l'entraînement présente un arbre d'entraînement (16) rotatif, et dans lequel une transmission d'entraînement (20) avec un arbre de sortie (22) est montée en aval de l'arbre d'entraînement (16), dans lequel la transmission d'entraînement (20) est prévue entre l'entraînement (12) et l'actionneur (26), et **caractérisé en ce que** l'unité de freinage (40) immobilise l'arbre d'entraînement (16) lorsque la déformation maximale ou au moins à peu près maximale de l'élément ressort (38) est atteinte, de sorte que l'énergie cinétique de la masse en mouvement est accumulée dans l'élément ressort (38) pour augmenter la force de préhension, de sorte qu'une force de préhension est ainsi fournie, qui est supérieure à une force de préhension obtenue uniquement avec l'entraînement, et qui est disponible lorsque l'arbre d'entraînement (16) est immobilisé et l'entraînement (12) mis hors service.

2. Dispositif de préhension ou de serrage (10) selon la revendication 1, **caractérisé en ce que** l'élément ressort (38) est réalisé sous la forme d'un amortisseur élastomère disposé sous précontrainte entre l'actionneur (26) et la mâchoire (28, 30) .

3. Dispositif de préhension ou de serrage (10) selon la revendication 1 ou 2, **caractérisé en ce que** la déformation élastique de l'élément ressort (38) lorsque l'objet (56) est saisi est plus importante que le jeu de l'actionneur (26) immobilisé.

4. Dispositif de préhension ou de serrage (10) selon la revendication 1, 2 ou 3, **caractérisé en ce qu'**une unité de commande (14) est prévue, qui active l'unité de freinage (40) lorsque l'objet (56) est saisi et l'élément ressort (38) déformé élastiquement.

5. Dispositif de préhension ou de serrage (10) selon la revendication 4, **caractérisé en ce que** l'unité de commande (14) commande l'unité de freinage (40) de telle sorte que l'unité de freinage (40) est activée lorsque l'unité de commande (14) détecte une panne de courant.

6. Dispositif de préhension ou de serrage (10) selon la revendication 4 ou 5, **caractérisé en ce que** l'unité de commande (14) active l'unité de freinage (40) de telle sorte que l'énergie cinétique se produisant en raison de la masse en mouvement est accumulée dans l'élément ressort (38) pour augmenter la force de préhension.

7. Dispositif de préhension ou de serrage (10) selon la revendication 4, 5 ou 6, **caractérisé en ce que** l'unité de commande (14) correspond avec des moyens de détection avec lesquels une déformation de l'élément ressort (38) peut être détectée.

8. Dispositif de préhension ou de serrage (10) selon la revendication 7, **caractérisé en ce que** les moyens de détection sont des moyens de mesure de pression avec lesquels la pression agissant sur l'élément ressort (38) et ainsi la déformation de l'élément ressort (38) peuvent être détectées.

9. Dispositif de préhension ou de serrage (10) selon la revendication 7 ou 8, **caractérisé en ce que** les moyens de détection sont des moyens de mesure de trajet avec lesquels la position de la mâchoire (28, 30) et donc la déformation de l'élément ressort (38) peuvent être détectées.

10. Dispositif de préhension ou de serrage (10) selon la revendication 7, 8 ou 9, **caractérisé en ce que** l'entraînement (40) est réalisé sous la forme d'un moteur électrique et que les moyens de détection sont des moyens de mesure de courant, avec lesquels la force de préhension et ainsi la déformation de l'élément ressort (38) peuvent être détectées par l'intermédiaire de la consommation de courant.

11. Dispositif de préhension ou de serrage (10) selon la revendication 10, **caractérisé en ce que** l'arbre d'entraînement (16) présente deux extrémités libres, et dans lequel l'une des extrémités libres coopère avec l'actionneur (26) et l'autre extrémité libre (42) coopère avec l'unité de freinage (40).

12. Dispositif de préhension ou de serrage (10) selon l'une quelconque des revendications précédentes, **caractérisé en ce que** l'actionneur (26) est réalisé sous la forme d'un pignon (24) pouvant tourner autour d'un axe de rotation, dans lequel l'élément ressort (38) est prévu entre la mâchoire (28, 30) et une partie de crémaillère (34) s'engrènant avec le pignon, disposée côté mâchoire.

13. Dispositif de préhension ou de serrage (10) selon l'une quelconque des revendications 1 à 12, **caractérisé en ce que** l'actionneur est réalisé sous la forme d'un pignon pouvant tourner autour d'un axe de rotation, dans lequel l'élément ressort est prévu entre l'axe de rotation et le pignon.

14. Dispositif de préhension ou de serrage (10) selon la revendication 13, **caractérisé en ce que** la partie de crémaillère (28) présente deux petits côtés (36) opposés l'un à l'autre, s'étendant transversalement au sens de mouvement de la mâchoire (28, 30), qui coopèrent respectivement avec un élément ressort (38).

15. Procédé permettant de faire fonctionner un dispositif de préhension ou de serrage selon l'une quelconque des revendications précédentes, **caractérisé par** les étapes suivantes :
- l'actionnement de l'entraînement (12) pour déplacer la mâchoire (28, 30) vers l'objet (56) à serrer,
- l'immobilisation de l'actionneur (26) ou d'une pièce (42) accouplée en mouvement à l'actionneur, prévue entre l'actionneur (26) et l'entraînement (12), lorsque l'objet (56) est saisi et que l'élément ressort (38) est déformé élastiquement,
- dans lequel l'immobilisation de l'actionneur (26) ou de la pièce (42) s'effectue de telle sorte que l'énergie cinétique se produisant en raison de la masse en mouvement est accumulée dans l'élément ressort (38) pour augmenter la force de préhension, de sorte qu'une force de préhension est fournie, qui est supérieure à une force de préhension obtenue uniquement avec l'entraînement.
